# EUROPEAN PATENT APPLICATION

(11) **EP 4 632 623 A1**
(43) Date of publication of application: **15.10.2025**
(21) Application number: 23901183.6
(22) Date of filing: 18.11.2023
(51) Int. Cl.: G06K 7/00

(54) **SYSTEM FOR PRESENTING, VERIFYING AND GATHERING METRICS OF ADVERTISING CONTENT PLAYED ON SCREENS AND/OR THROUGH SPEAKERS OF COMMERCIAL ESTABLISHMENTS**

(30) Priority: 09.12.2022 MX 2022015861
(71) Applicant: Vite Orozco, José Luis, Ciudad de México, 11560 (MX)
(72) Inventor: Vite Orozco, José Luis, Ciudad de México, 11560 (MX)
(74) Representative: ABG Intellectual Property Law, S.L.
(86) International application number: PCT/MX2023/050068
(87) International publication number: WO 2024/123167

(57) **Abstract**

The invention relates to a system for presenting advertising content and/or multimedia content on at least one screen (P) and/or through at least one speaker (B) of a commercial establishment, which makes it possible to listen to and/or see content through at least one speaker in a harmonious and subtle manner, in synchrony with the original transmission, and/or in an area of the screen, thereby preventing the visual appearance of the original transmission of a piece of multimedia content from being encroached upon.

## Description

### Field of the Invention

The present invention relates to a system for the presentation of multimedia content and, more particularly, relates to a system for the presentation of multimedia content containing advertising. The system of the present invention is configured to ensure that the presented multimedia content is viewed and/or heard on at least one screen and/or speaker of a commercial establishment where a transmission is being shown and/or displayed, through verification performed by audio-visual monitoring equipment that captures a specific portion of the transmission with advertising content, in order to detect a signal embedded in said multimedia content that is used as a means of authenticating viewing of the advertising content.

### BACKGROUND OF THE INVENTION

Multimedia content transmissions are extremely widespread in all aspects of daily life. Most people consume multimedia content not only at home but also in the retail centers and commercial establishments they visit. For example, during activities such as shopping for products and eating food in commercial establishments. In these cases, consumers lack the possibility to select the multimedia content displayed on screens, so they are restricted to consuming the multimedia content provided by the manager of the commercial premises. In this situation, consumers are forced to consume the content displayed on screens without having the opportunity to decide what is being broadcast. The impossibility of selecting the content to be transmitted by consumers and establishment owners, contrary to what it seems, not only becomes a strategic advantage that can be used to consume multimedia content that they would not otherwise view under normal conditions, but also becomes a tool to display advertising, which in recent years has been relegated by consumers to be avoided, since streaming services have given them the ability to consume content on demand without included advertisings. However, even though conventional multimedia content transmissions can be used to present advertising content, they still have the disadvantage of not providing the advertising owner with any type of feedback with information about the success of their campaign, such as the number of times a particular advertisement has been viewed, or the volume and audience profile to which said advertisement has been shown (gender, age, etc.). Furthermore, the advertising owners cannot actively choose to broadcast the advertisement only in certain specific consumption locations, nor segment their campaigns to reach a specific target audience.

Because advertising broadcast on conventional channels is consumed less actively, new strategies have had to be developed to ensure that advertising content reaches end consumers in a more active and personalized manner, this is so that the advertisements reach their target audience more effectively and efficiently. For example, Patent US9154852B2 protects a method for displaying advertising over a multimedia broadcast, based on embedding the advertising over broadcast elements, for example, by inserting the advertising over an image element, such that the advertising merges with the broadcast, which aims to prevent the user from skipping the advertising as this is part of the broadcast. However, this causes several drawbacks, as the original broadcast is being modified, and important details of the programming may be lost when advertising invades the signal space. Furthermore, if complex processing of the input signal is required, the broadcast rights of the original owner of the transmitted multimedia content are invaded, requiring special permits and usage licenses to modify the signal. Furthermore, since modifications to the appearance of the elements displayed in the signal are necessarily required, elements that affect the viewing experience may be modified, which may displease potential consumers and cause them to abandon the broadcast in search of other viewing options without alterations of the original content. Furthermore, with the processing scheme proposed in this patent, it is not possible to verify whether the advertisement has been viewed or the number of people reached by the broadcast.

Patent Application WO1999060783A1 describes a system for controlling the presentation of advertisements to a television viewer. In this system, an advertising database stores advertisements that are presented to viewers based on the detection of a triggering event, such as the reception of a specific television program or the broadcast of a sporting event. The system is also designed to stop broadcasting the advertisement if the triggering event is no longer detected. This system is focused on providing a personalized advertising experience for each consumer; however, if the user does not play any of the content associated with the advertisement, the system cannot make changes to its programming, and therefore advertisings are not displayed. Furthermore, advertisements are displayed in pop-up windows that occupy a portion of the display screen, interfering with the correct viewing of transmitted multimedia content, which can generate some rejection by consumers when the original broadcast they were watching is invaded. Additionally, there is no way to verify if the advertising was transmitted correctly, nor which group of users was shown said advertising.

Patent US10572895B2 protects a method for displaying multimedia elements over a broadcast. This method considers the detection of elements on the broadcast to generate instructions that, when interpreted, authorize the insertion of an element over the broadcast, such as an advertising banner. This development, therefore, allows advertising to be displayed at specific times during the broadcast, which could increase the success of the advertising campaign and/or audio content. However, since a portion of the broadcast is invaded, elements of it may be hidden, which can be annoying to end consumers, who intend to view the multimedia content in its original form. Additionally, this method cannot determine whether the advertisement was transmitted correctly or the type of audience that viewed it.

Patent US7913275B2 protects a system for displaying advertising targeted to a subscriber, in which a processor is configured to select an advertisement based on a preselected advertising category; a means adapted to collect information about the programs being broadcast on a screen; means for correlating program information with preselected advertising categories; a transmitter that broadcasts the selected advertising on a single channel; and a screen on which the advertising is displayed. However, this system switches between different channels to present more than one advertising content, so the user may miss the original broadcast due to being on a channel other than their chosen one. Furthermore, since displaying the advertisement requires switching between channels, situations may arise in which the user loses part of the broadcast.

Finally, Patent Application US20150213495A1 describes a system for distributing personalized advertising in multimedia content broadcasts, in which a specific region of a multimedia content broadcast screen is selected for the advertisement to be displayed. In this system, advertising content can invade the multimedia content display space, thereby interfering with normal viewing of the broadcast multimedia content. Additionally, the system proposed in the patent application does not perform any type of verification to ensure that the advertising content is displayed correctly, nor does it ensure the type of audience to which it was displayed. Furthermore, none of the systems available on the market allow advertising owners to select the establishment where their advertising will be displayed, nor do they allow brand owners to choose the establishments and/or consumer centers where they want to display their advertising.

Commercially available systems to present advertising content, therefore, have the common disadvantage of having to invade the transmitted signal to allow the display of advertising content, since in all cases, advertising is inserted over the transmitted signal, which can affect the correct viewing of the programming. Furthermore, since advertisements invade part of the broadcast, the original appearance of the programming is modified, which can lead to a loss of information that can affect the user experience while watching the broadcast. Furthermore, none of the systems for presenting available advertising content is designed to verify the correct display of advertisements, so they cannot guarantee that the multimedia content is being transmitted correctly on the screens where it is being broadcast. Likewise, none of the available advertising delivery systems allows for segmentation of advertising by consumption centers, nor for creating a history of the gender and number of people to whom the advertising was transmitted.

In view of the aforementioned problems, there is a need to provide a system for presenting advertising content, configured to ensure the display of advertising content on at least one screen in a commercial establishment, using an audiovisual tracking device that captures at least a portion of the transmission, thereby ensuring that the advertising content is being transmitted to the target audience. Likewise, there is also a need to provide a system for presenting content that allows advertising content to be transmitted in parallel with a multimedia content transmission, which can prevent advertising content from invading the multimedia content transmission, so that the visual appearance of the content of the original transmission is not modified.

### SUMMARY OF THE INVENTION

In order to overcome the disadvantages of existing systems for transmitting advertising multimedia content, the present invention aims to provide a system for presenting advertising content on screens and/or speakers in commercial establishments, which may or may not interfere visually and/or audibly with an external multimedia content transmission.

A particular objective of the present invention is to provide a system for presenting advertising content on screens and/or speakers in commercial establishments, which has tracking means configured to guarantee the correct reproduction, transmission and display of the advertising content through audio-visual verification, as well as determining the audience reached and its profile.

Another objective of the present invention is to provide a system for presenting advertising content on screens and/or speakers in commercial establishments, which monitors the displayed advertising content independently of the signal sent to the monitor and/or speakers.

An additional objective of the present invention is to provide a system for presenting advertising content on screens and/or speakers in commercial establishments, which allows for the presentation of advertising content sequentially and temporally, and which also has means for detecting the viewing and/or listening of said content, the audience volume, and the type of consumer profile.

The aforementioned objectives, as well as other objectives and advantages of the present invention, will become apparent from the following detailed description.

### DESCRIPTION OF THE FIGURES OF THE INVENTION

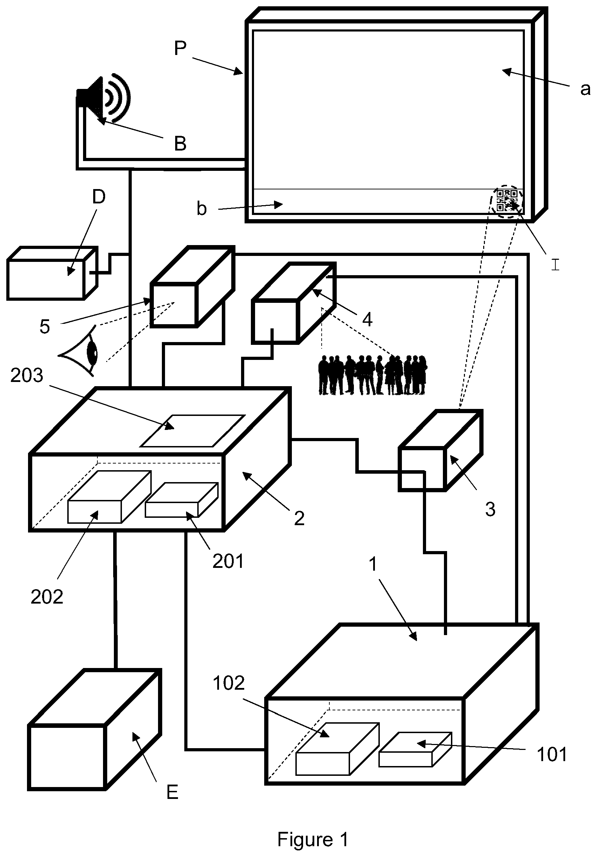

Figure 1 shows a representation of the system for presenting multimedia advertising content on at least one screen (P) and/or at least one speaker (B) of a commercial establishment according to the present invention.
Figure 2 shows a representation of the system for presenting multimedia advertising content on at least one screen (P) and/or at least one speaker (B) of a commercial establishment according to the present invention, in a second preferred configuration.

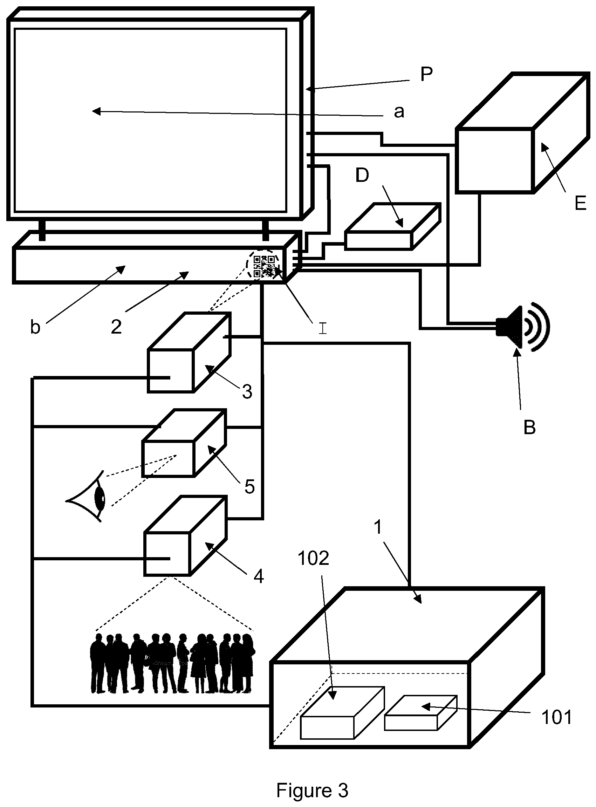

Figure 3 shows a representation of the system for presenting multimedia advertising content on at least one screen (P) and/or at least one speaker (B) of a commercial establishment according to the present invention, in a third preferred configuration.

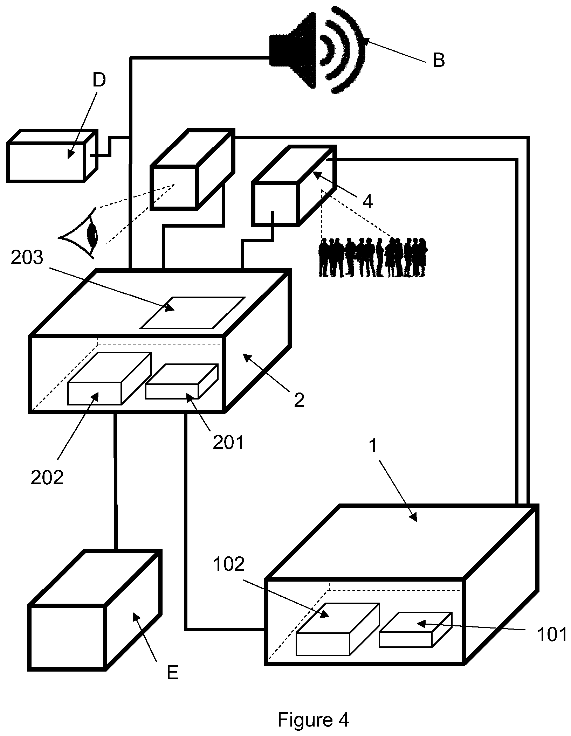

Figure 4 shows a representation of the system for presenting multimedia advertising content on at least one speaker (B) of a commercial establishment according to the present invention.

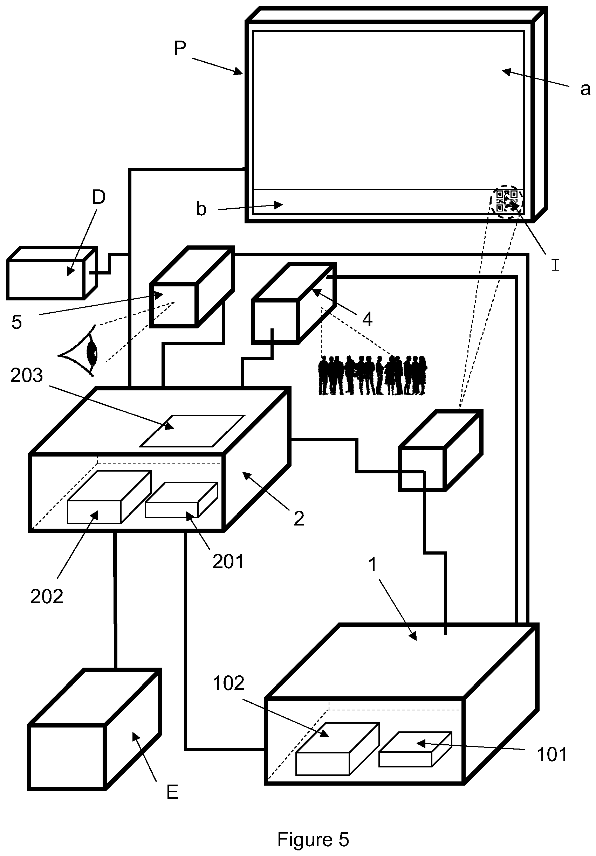

Figure 5 shows a representation of the system for presenting multimedia advertising content on at least one screen (P) of a commercial establishment according to the present invention.
Figure 6 shows the relative position of the surface (a) on which the multimedia content is played, respect to the surface (b) on which the plurality of advertisements is transmitted sequentially, in two of the preferred embodiments of the present invention (the black area represents the transmitted multimedia content).

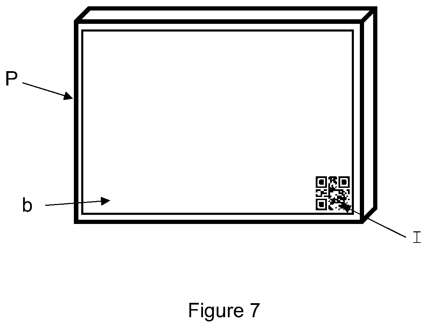

Figure 7 shows a transmission in which only the advertising content is displayed in full screen, with surface (b) covering the entire effective area of the screen.

### DETAILED DESCRIPTION OF THE INVENTION

The present invention provides a system for presenting advertising content on screens and/or speakers in commercial establishments, which is designed to provide transmissions of multimedia advertising content parallel to multimedia content transmissions, such as satellite, cable broadcast transmissions, or from a storage, without the multimedia advertising content overlapping with the transmission, thus preventing the multimedia advertising content from invading the viewing and/or listening area of real-time transmission. Furthermore, the present invention provides a system for presenting multimedia advertising content, which is adapted to track the correct viewing and/or listening of the advertising content displayed on a display screen and/or speakers, so that there is confirmation of the viewing and/or listening of the executed advertising content (Audience profile and volume).

Additionally, the present invention provides a system for presenting multimedia advertising content, configured to visually and/or audibly track the multimedia advertising content displayed on at least one screen and/or speaker, to ensure that the advertising content is being viewed and/or heard by a target audience, thereby preventing misuse of the system, for example, in the event of maintaining broadcast with the monitors and/or speakers off or the transmission of unauthorized advertising content. Additionally, the system of the present invention is capable of creating a profile of the audience type to whom the multimedia advertising content is being transmitted. Likewise, the present invention allows multimedia advertising content to be displayed on at least one display screen and/or speaker, carrying out a scheduled control in pre-established time windows to determine the effective viewing and/or listening time of each of the multimedia advertisements displayed on the screen and/or speaker, thereby carrying out an exact control of the time and number of times each advertisement and/or content has been viewed and/or heard. Additionally, the system of the present invention is configured to insert a tracking image (I) and/or a recognition audio to authenticate the transmitted advertisements, such that a more precise control of the transmission of multimedia advertising content can be carried out, avoiding the insertion of unauthorized advertisements into the transmission.

To achieve the aforementioned, the system for presenting advertising content on at least one screen (P) and/or at least one speaker (B) of a commercial establishment of the present invention is comprised of a central control device (1) and a plurality of advertising content presentation devices (2), which will be described in more detail below.

### Central control device (1)

The central control device (1) has a processor (101) configured to: receive a plurality of advertising campaigns comprising a plurality of advertisements, said advertising campaigns and/or multimedia content being stored in a central memory (102); selecting one or more of the stored advertising campaigns and/or multimedia content in the central memory (102, ) based on a segmentation of the campaign carried out based on a selection of the chosen consumption centers, and based on an assignment of specific temporality during which the advertising campaign will be available for transmission, to assign to said selected campaign at least one unique identifier (ID) associated with a specific user of the system; and sending the selected advertising campaign and/or multimedia content to at least one of the plurality of advertising content presentation devices (2).

### Advertising content presentation device (2)

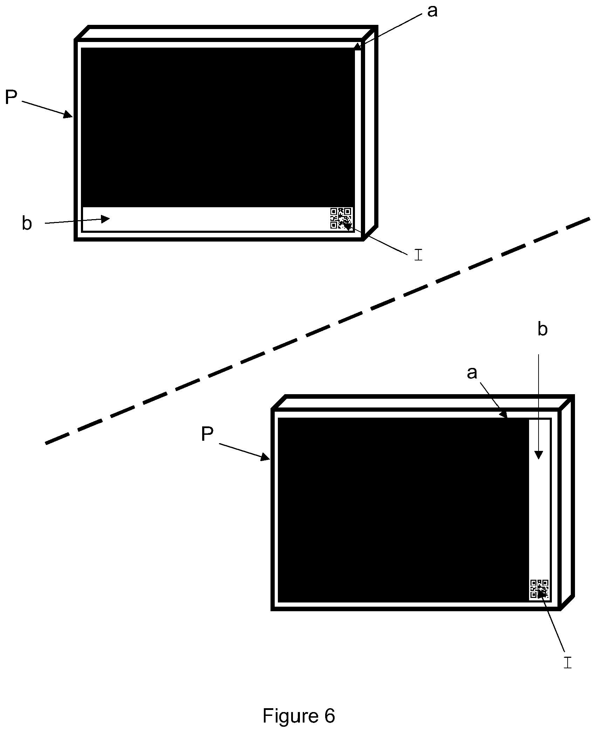

The advertising content presentation device (2) is comprised of:
- a processor (201) configured to connect to the data transmission network in order to receive one or more advertising campaigns and/or multimedia content selected by the central control device and to consult the ID associated with them and compare it with the ID stored in a user memory (202); to display on a display screen (203) an authorization alert for the storage and transmission of the advertising campaign(s) and/or multimedia content in the user memory (202), only if the ID associated with the campaign(s) is the same as the ID stored in the user memory (202), said display screen preferably being a touch screen that allows interaction with the advertising campaign(s) and/or multimedia content stored in the user memory (202); to authorize the storage of the selected advertising campaign(s) in the user memory (202); start the reception of at least one multimedia content received from an external source (E) and transmit it to at least one screen (P) and/or at least one speaker (B) of the commercial establishment, reproducing it on a surface (a) of said at least one screen (P) and/or at least one speaker (B), being able to maintain its original aspect ratio when being reproduced on the at least one screen (P) and/or interspersed in a subtle, harmonious and synchronized manner with an audio transmission in at least one speaker (B), said external source (E) being for example a satellite decoder, a cable transmission, an audio reproduction system, streaming or content stored in an external memory; start the sequential transmission of each of the plurality of advertisements, on a surface (b) of the at least one screen (P) and/or in at least one channel of the at least one speaker (B), said surface (b) being in a region adjacent to the surface (a) parallel to either the long side or the short side of said surface (a), as can be seen in Figure 6, without said advertisements being able or not to invade the area of the surface (a); insert a tracking image (I) in a portion of the surface (b) for each of the reproduced advertisements and/or at least one confirmation audio that will be transmitted by the at least one speaker (B); and generate a report with the number of times that each advertisement has been transmitted, which is stored in the user memory (202); and
- an optical-acoustic sensor or tracking camera (3), in connection with the processor (201) and/or with the processor (101), configured to detect the tracking image (I) inserted on the advertisements transmitted on the at least one screen (P) and/or the audio emitted by the at least one speaker (B), preferably in pre-established time windows and, additionally configured to detect an audio associated with the transmission of the advertising content; and generate a report with the number of times that each tracking image (I) and/or audio was detected by said optical-acoustic sensor or tracking camera (3), which is sent to the processor (201), so that said report is compared with the report stored in the user memory (202), to determine if there are differences between the number of times that the advertisement has been transmitted, in such a way that if differences are detected between the number of advertisements transmissions and the number of times that the tracking image (I) and/or the audio have been detected, an alert is generated that is shown on the display screen (203) and/or is sent to the central control device (1), to carry out corrective actions. Preferably, the comparison between the generated report and the stored report is carried out by an adaptive algorithm or artificial intelligence program, stored in the user memory (202), which detects transmission behavior patterns, which allow determining whether the advertising campaigns are being carried out in the programmed manner or if there are deviations in the transmission behavior.

In a preferred embodiment of the present invention, the processor (201) of the advertising content presentation device (2) is further configured to interrupt the transmission of multimedia content and display in full screen at least one of the plurality of advertisements stored in the user memory (202) and/or transmit an advertising audio and/or multimedia content on the at least one speaker (B) in all of its channels, for example in response to a scheduled time window, a programming change or during the loss of input signal, this in order to avoid the presentation of screens without any content and/or muted speakers. Likewise, each of the content presentation devices (2) may be connected to a signal splitter (D) in order to transmit the multimedia content and/or the advertisement to a plurality of screens (P) and/or a plurality of speakers (B).

In a further embodiment of the present invention, the tracking image (I) is a plurality of QR codes, each associated with a single advertisement of the advertising campaign, said QR codes containing information referencing an external link associated with a platform/web page with content related to each of the advertisements broadcast on the screen (P). In this embodiment, the QR codes can be scanned by smartphones so that the consumer can access information related to the advertisement, such as views of the advertised product, discount coupons, or numbers to participate in promotions, surveys, etc.; and the number of users who read the code can be counted.

In yet another embodiment of the present invention, the advertising content presentation device (2) has a second optical-acoustic sensor, or second camera (4) connected to processor (101) or processor (201), which is placed on the ceiling of the commercial establishment and is configured to detect the number of consumers viewing the screen (P) and the ambient audio of the commercial establishment. In this embodiment, said second optical-acoustic sensor or second camera (4) and/or the processor (201) are configured to separate the consumers by gender, such that a report is generated with the total number of consumers of each gender who are viewing the advertising content, said report also being associated with the tracking image (I) that is being transmitted over the advertising content and/or with a confirmation audio transmitted by the speakers. Therefore, the group and number of consumers to whom a specific advertisement was transmitted can be determined, such that the success of the transmission can be determined based on the number of consumers reached and their profile. In the previously described embodiment, the number of consumers detection who are viewing the screen (P) is preferably carried out using an adaptive algorithm or artificial intelligence program, which through training can perform a search for discrete patterns, which allow predicting the behavior of consumers within the commercial establishment, in such a way that the advertising content presentation device (2) can select the type of advertising campaign to be deployed depending on the type of consumer group that will be within the commercial establishment, a specific time period, or a triggered event such as a score in a sporting event.

In a further embodiment of the present invention, the advertising content presentation device (2) has a third optical-acoustic sensor, or third camera (5) connected to processor (101) or processor (201), configured to detect the eyes of consumers who are viewing the screen (P) and/or listening to the audio with the voices of the consumers. In this embodiment, said third optical-acoustic sensor or third camera (5) is additionally configured to determine whether the users are directing their gaze towards the at least one screen (P) and/or producing any audio related to the transmission of the multimedia content such as laughter of acceptance or repetition of the tunes, in such a way that it generates a report with the number of times that the consumers directed their gaze towards the at least one screen (P) and/or the number of times they made comments on the transmission, also counting the time that each consumer kept their gaze fixed on the advertisements displayed on the screen (P) and/or the times they commented on the advertising, thereby enabling the determination of the average viewing and/or listening time of the advertising content by the consumers. Said report is preferably associated with the time windows in which the tracking image (I) and/or the confirmation audio that is being transmitted over the advertising content is shown in such a way that it can be determined if said transmission of advertising content is being viewed and/or listened to by the consumers. Furthermore, said third optical-acoustic sensor or third camera (5) is adapted to separate consumers based on the number of men and women, as well as their average age; the time spent sitting/standing; the number of direct and indirect views they made of the displayed advertising content; and the number of times that comments on the broadcast were detected. Likewise, said third optical-acoustic sensor or third camera (5) is configured in such a way that it is capable of detecting particular expressions in consumers, such that it can carry out a preliminary monitoring of the acceptance degree of the displayed advertising, assigning for example an acceptance value if, for example, smiles are detected or a non-acceptance value if, for example, frowns or yawns are detected, or in the case of audio transmission if the consumers sing a song or discuss topics associated with the broadcast advertising. Additionally, said third optical-acoustic sensor or third camera (5) is configured to detect if there are risk events in the commercial establishment, such as brawls, fire outbreaks, or robberies, in such a way that alerts can be generated that are displayed on the advertising content presentation device (2) or are sent remotely to the central control device (1).

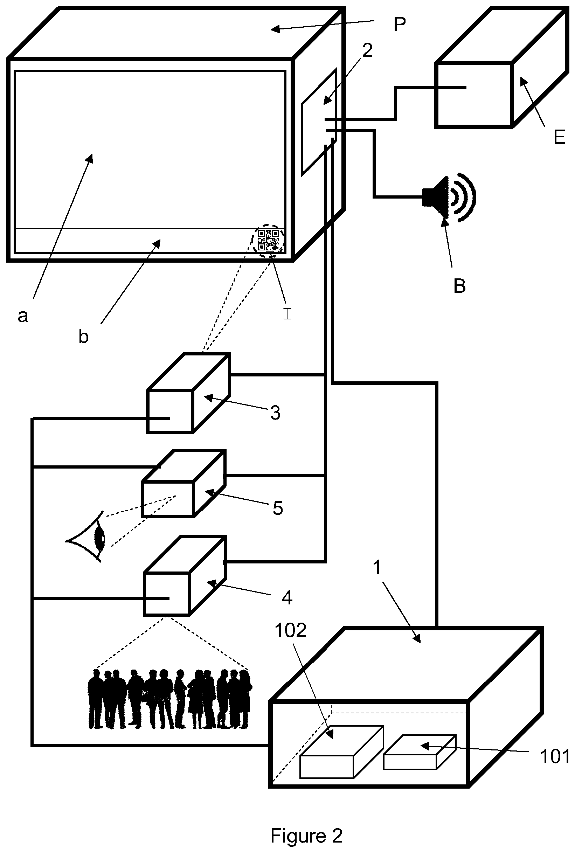

In a preferred configuration of the present invention, the advertising content presentation device (2) forms an integral part of the screen (P), such as shown in Figure 2, in such a way that the signal splitter (D) is dispensed with; while in another additional configuration, said advertising content presentation device (2) has a series of adaptations that allow it to be coupled to the screen (P) by means of a series of anchoring structures, in such a way that it can be hung from the bottom part of the screen (P) or on one of its sides, being the display screen (203) used in this configuration as the surface (b) on which the advertisements will be displayed, avoiding in this configuration any type of invasion of the surface (a).

The present invention, as previously described, allows for tracking the number of times an advertisement has been viewed on a screen, without the possibility of the transmitted signal being hidden, which guarantees correct display of the advertisements without interfering with the transmission of the original multimedia content. Furthermore, because the advertising content may not invade the transmission of parallel multimedia content, it is possible to avoid modifying the visual appearance of the transmission, also being possible to resize the original transmission without visually invading it with advertising and/or inserting advertising audio and/or content harmoniously and subtly over the original transmission, which can generate greater acceptance of the advertising by the end consumer. Additionally, since the advertising campaign(s) are segmented before being sent to the advertising content presentation devices (2), the owner of the advertising content is allowed to decide which commercial establishments their advertising campaigns will be sent to, based on the volume and affinity of the audience profile that attends said commercial establishments.

The present invention has been described in accordance with its preferred embodiments; however, it will be apparent to one of ordinary skill in the art that modifications may be made without departing from its spirit and scope.

## Claims

1. A system for the presentation, verification, and metrics of multimedia advertising content on at least one screen (P) and/or at least one speaker (B) of a commercial establishment, comprising a central control device (1) and a plurality of advertising content presentation devices (2), **characterized in that**:
the central control device (1) has a processor (101) configured to: receive a plurality of advertising campaigns comprising a plurality of advertisements, said advertising campaigns being stored in a central memory (102); select one or more of the advertising campaigns stored in the central memory (102), to assign to said selected campaign or campaigns a unique identifier (ID) that is associated with a specific user of the system; and send the selected advertising campaign(s) to at least one of the plurality of advertising content presentation devices (2); and
- each of the plurality of advertising content presentation devices (2) comprises:
a) a processor (201) configured to: connect to the data transmission network, to receive the advertising campaign(s) and consult the ID associated with them and compare it with the ID stored in a user memory (202); display on a display screen (203) an authorization alert for the storage of the advertising campaign(s) in the user memory (202), only if the ID associated with the campaign(s) is the same as the ID stored in the user memory (202); authorize the storage and broadcast of the selected advertising campaign(s) in the user memory (202); start the reception of at least one multimedia content received from an external source (E) and transmit it to the at least one screen (P) and/or to the at least one speaker (B) of the commercial establishment, reproducing it on a surface (a) of said at least one screen (P) and/or interrupting in a harmonically, synchronized and subtly manner the audio transmitted by the at least one speaker (B), maintaining its original visual and/or auditory appearance; start the sequential transmission of each of the plurality of advertisements, on a surface (b) of the at least one screen (P) and/or at least one channel of the speaker (B), said surface (b) being in a region adjacent to the surface (a) that is parallel to either the long side or the short side of said surface (a), or to a combination thereof, preferably without said advertisements invading the area of the surface (a) and/or interrupting in a harmonically, synchronized and subtly manner the audio transmitted by the at least one speaker (B); inserting a tracking image (I) in a portion of the surface (b) for each of the reproduced advertisements, or an audio about the advertising content transmission; and generating a report with the number of times each advertisement has been transmitted, which is stored in the user memory (202); and
b) an optical-acoustic sensor or tracking camera (3), in connection with the processor (201) and/or the processor (101), configured to: detect the tracking image (I) inserted over the transmitted advertisements or the audio produced on the at least one screen (P), preferably in pre-established time windows; and generate a report with the number of times that each tracking image (I) or the audio was detected by said optical-acoustic sensor or tracking camera (3), which is sent to the processor (201), so that said report is compared with the report stored in the user memory (202), to determine if there are differences in the number of times the advertisement has been transmitted, such that if differences are detected between the number of advertisement transmissions and the number of times that the tracking image (I) or the audio have been detected, an alert is generated that is displayed on the display screen (203) and/or is sent to the central control device (1), to perform corrective actions.

2. The system for presenting advertising content according to claim 1, **characterized in that** the selection of the advertising campaign carried out by the central control device (1) is done by segmenting the campaign into selected consumer centers and assigning a specific temporality during which the advertising campaign will be available for broadcast; and the advertising campaign(s) and/or multimedia contents are sent to the commercial establishments based on a prior selection of the commercial establishments based on the profile and volume type of consumers in said establishments.

3. The system for presenting advertising content according to claim 2, **characterized in that** each of the plurality of advertising content presentation devices (2) can accept or decline the advertising campaign(s) and/or multimedia content, based on the segmentation and profile of the campaign carried out by the establishment and/or consumer center on the central control device.

4. The system for presenting advertising content according to claim 1, **characterized in that** the display screen (203) is a touch screen; and each of the advertising content presentation devices (2) is connected to the central control station via cloud storage.

5. The system for presenting advertising content according to claim 1, **characterized in that** the processor (201) of the advertising content presentation device (2) is further configured to interrupt the transmission of multimedia content and display in full screen and/or transmit to the at least one speaker (B) at least one of the plurality of advertisements and/or multimedia content stored in the user memory (202), in response to a scheduled time window, a programming change, or the loss of input signal.

6. The system for presenting advertising content according to claim 1, **characterized in that** the tracking image (I) is a plurality of QR codes, each associated with a single advertisement of the advertising campaign.

7. The system for presenting advertising content according to claim 6, **characterized in that** said QR codes contain information referring to an external link associated with a web page/platform with content related to each of the advertisements broadcast on the screen (P).

8. The system for presenting advertising content according to claim 7, **characterized in that** the content related to the advertisements is a display of the advertised product, discount coupons, numbers to participate in promotions, surveys, or user counting.

9. The system for presenting advertising content according to claim 1, **characterized in that** the advertising content presentation device (2) further comprises a second optical-acoustic sensor or second camera (4) connected to processor (101) and/or processor (201), which is placed on the ceiling of the commercial establishment, configured to detect the number of consumers within the commercial establishment and characteristics of said consumers, as well as the ambient audio of said commercial establishment.

10. - The system for presenting advertising content according to claim 9, **characterized in that** the second optical-acoustic sensor or second camera (4) is further configured to separate consumers by gender, counting the average time of the users in the commercial establishment, determining the largest heat zones (concentration of consumers per area), and to generate a report with the total number of consumers of each gender who may be viewing the advertising content, said report also being associated with the tracking image (I) that is being transmitted on the advertising content, determining an approximate data of the consumer group to whom a specific advertisement was transmitted.

11. The system for presenting advertising content according to claim 10, **characterized in that** the second optical-acoustic sensor or second camera (4) is further configured to separate consumers by approximate age group.

12. The system for presenting advertising content according to claim 1, **characterized in that** the advertising content presentation device (2) comprises a third optical-acoustic sensor or third camera (5) connected to processor (101) or processor (201), configured to detect the eyes of consumers viewing the screen (P) and/or capture audio from consumers relating to the advertising displayed.

13. The system for presenting advertising content according to claim 12, **characterized in that** the third optical-acoustic sensor or third camera (5) is configured to determine whether users are directing their gaze towards the at least one screen (P) and/or are listening to the audio from the at least one speaker (B), such that a report is generated with the number of times that consumers directed their gaze towards the at least one screen (P) and/or listened to the audio from the at least one speaker (B), also counting the time that each consumer kept their gaze fixed on the advertisements displayed on said screen (P) and/or maintained attention on the audio from the at least one speaker (B), to determine the average viewing and/or listening time of the advertising content by consumers.

14. The advertising content presentation system according to claim 13, **characterized in that** the report is associated with the time windows in which the tracking image (I) and/or a control audio being transmitted over the advertising content, to determine whether said advertising content transmission is viewed and/or listened to by consumers.

15. The advertising content presentation system according to claim 13, **characterized in that** the third optical-acoustic sensor or third camera (5) is configured to separate consumers based on the number of men and women, as well as their average age; the time spent sitting/standing; the number of direct and indirect views they made of the displayed advertising content; and/or the number of times they commented about the transmitted advertising.

16. The advertising content presentation system according to claim 15, **characterized in that** the third optical-acoustic sensor or third camera (5) is further configured to detect particular expressions in consumers, such that it can perform a preliminary monitoring of the degree of acceptance of the displayed advertisement, assigning an acceptance value if, for example, smiles are detected, or a non-acceptance value if, for example, frowns or yawns squinting or yawning are detected; or if the consumers sang a song or commented on the advertisement or content, or expressed mood changes detected through sound, hearing, and visual means.

17. The advertising content presentation system according to claim 1, **characterized in that** the advertising content presentation device (2) forms an integral part of the screen (P).

18. The system for presenting advertising content according to claim 1, **characterized in that** the advertising content presentation device (2) comprises a series of anchoring structures for coupling it to the screen (P) such that it hangs from the bottom of the screen or on one of its sides, the display screen (203) being used as the surface (b) for displaying the advertisements.

19. The system for presenting advertising content according to claim 1, **characterized in that** each of the plurality of advertising content presentation devices (2) is connected to a splitter (D) for presenting the advertisements and/or the multimedia content transmission on a plurality of screens (P) and/or a plurality of speakers (B).

20. The system for presenting advertising content according to claim 1, **characterized in that** the third optical-acoustic sensor or third camera (5) is configured to detect if there are risk events in the commercial establishment, such as brawls, fire outbreaks, or robberies, in such a way that alerts can be generated that are displayed on the advertising content presentation device (2) or are sent remotely to the central control device (1).
